# EUROPEAN PATENT SPECIFICATION

(11) **EP 1 711 713 B1**
(45) Date of publication and mention of the grant of the patent: **26.03.2008**
(21) Application number: 04808878.5
(22) Date of filing: 13.12.2004
(51) Int. Cl.: F15B 11/042, F16L 55/136, F16L 55/132

(54) **PLUG WITH A HYDRAULIC CYLINDER AND METHODS FOR SETTING AND RELEASING A PLUG**
STOPFEN MIT EINEM HYDRAULIKZYLINDER UND VERFAHREN ZUM SETZEN UND FREIGEBEN EINES STOPFENS
TAMPON A VERIN HYDRAULIQUE ET PROCEDES POUR LA MISE EN PLACE ET LE RETRAIT D'UN TAMPON

(30) Priority: 15.12.2003 NO 20035587
(43) Date of publication of application: 18.10.2006
(73) Proprietor: TDW Offshore Services AS, 4033 Stavanger (NO)
(72) Inventor: SYSE, Harald, N-4052 Royneberg (NO); ALEKSANDERSEN, Jostein, N-4070 Randaberg (NO)
(74) Representative: Briddes, Sam
(86) International application number: PCT/NO2004/000384
(87) International publication number: WO 2005/057020

(56) References cited:
- WO-A-03/067134
- DE-A1- 19 631 804
- US-A- 4 272 984
- US-A- 4 854 384

## Description

The present invention regards a plug with a hydraulic cylinder for closing off a pipeline and methods for setting and or releasing said plug in said pipeline.

Plugs in this context should be understood to be an element with anchoring and sealing devises, which element is conveyed in a pipeline to close or seal off the pipeline at a certain point in the pipeline. These plugs may be permanent or temporary, which in the latter case means that they are removable after they have performed their task. Removable plugs are more and more used when there is a need for closing off a pipeline, for instance when an oil/gas pipeline has to be repaired due to for instance corrosion, collapses or other damages. Plugs are also now more used instead of valves fitted in the pipeline during building of the pipeline. This because the plug is now flexible and also since there often are problems with closing a valve that has been sitting inactive in a pipe for several years. If the plug should compete with an ordinary valve is the need for a reliable plug a vital necessity.

Previously plugs have been used to close off a fluid stream at a certain point in a pipeline where the distance to an entry point for the plug has been of a limited length, which means the plug may have direct contact with the outside of the pipeline through for instance a cable. Now the pipelines are becoming longer and the need for using plugs further from an entry point is increasing. This means there are no possibility of having cable feed plugs, so the plugs must be remotely controlled or autonomous, with no feed lines to the outside of the pipeline. This is the case for instance for pipelines running from an offshore installation to an onshore processing plant or supply pipelines for gas and oil from a oil field to the user market.

When using a plug in a major pipeline from a gas/oil field to a user market or a processing plant there must be an absolute certainty that the plug operates according to plan both when setting the plug but especially when releasing the plug. The damage done if a plug isn't setting is large but not at all comparable with the damage done if one is not able to release an already set plug. That may cost several days, months or even years of unnecessary loss of production from an entire oil/gas field in addition to costs related to changing the part of the pipeline where the plug is stuck. So there is an absolute must to have the certainty that once the plug is set one is able to release it again.

The system must also be reliable over time since the case may be that the plug is set and sits there for several months or years and then should be released.

Another use for removable plugs are if valve elements need to be maintained, a new field should be added to a main pipeline or even in the case where a water pipe from for instance a water dam has to be mended or replaced. The plugs may be used in pipes with a pressurized fluid. If the plug is of a kind with no cable feed it may be use wherever in the length of the pipe.

Prior art plugs are of a kind having anchoring and sealing means operated by at least one hydraulic cylinder with a control system, with a control valve which is closed in a neutral position, i.e. the valve is only open when energy is feed to the valve. The plug is set by feeding energy to the valve so it goes to an open position, hydraulic fluid is pressurized through the valve to the hydraulic cylinder and the hydraulic cylinder is setting the anchoring and/or sealing means. When the plug is set, the energy is cut off to the valve and it closes, with the hydraulic cylinder in a pressurized position, with the anchoring and or sealing means in a set position.

For releasing the plug a signal and energy has to be feed to a valve in the plug to open the valve to relieve the pressurized hydraulic fluid in the hydraulic cylinder - to be able to retract the anchoring and sealing means as for instance described in US 4 854 384 and WO 03/067134. This releasing procedure is a critical procedure, and normally there is at least one backup system for this in the plug, in case the procedure does not work, either due to lack of available energy, damage to the control line, a stuck valve or other incidents. To get a necessary security in this system, when talking about a central pipeline from a large oilfield, there is as mentioned at least one and normally several backup systems. These backup systems take vital room in the plug and make the plug more complicated - both in production and also in maintenance. Several elements and systems in the plug make the plug also less reliable.

It is an object of the present invention to provide a plug which is easier to produce and maintain and at the same time gives the necessary security in the setting and releasing procedure. It is also an object to provide a plug and a method for setting and releasing the plug which plug and method do not need additional back-up systems for securing the release of the plug. To obtain a more reliable plug is also an object of the invention.

A plug with a hydraulic cylinder and method for setting and releasing a plug wherein the above mentioned objects are achieved is obtained with a plug and methods according to the independent claims. Further features of the invention appear form the dependent claims.

With the term hydraulic cylinder it is meant a cylinder with endplates and a piston head within said cylinder and a piston rod running from said piston head and out of said chamber on one or both sides of the piston head. The control system for the hydraulic cylinder comprises a fluid line between at least on side of the hydraulic cylinder's piston head and a source of hydraulic fluid. This fluid line comprises in at least a part two parallel lines. In one of the lines is there arranged a pump. The other parallel line comprises a control element. This control element allows less fluid through the line in the opposite direction of the pump, than the pump when the pump is running. The control element has further a neutral open position and allows fluid through when the pump is not running, relieving the pressure of the high pressure side of the hydraulic cylinder.

The invention also regards a plug with anchoring and sealing devices operated by at least one hydraulic cylinder, which is operated by a control system for setting and/or releasing the plug. The hydraulic cylinder may operate both anchoring and sealing devices or just one of them or there may be several hydraulic cylinders for operation of for instance the anchoring system.

The plug according to the invention is used for closing of a pipeline for the stream of a fluid. The pipeline is normally a gas and or oil pipeline but may also be a pipeline or pipe or tube for any other fluid. The plug is preferably remotely operated, but can be operated by control lines running through the pipeline to an entry point.

The control system for the hydraulic cylinder comprises according to the invention, a fluid line between at least on side of the hydraulic cylinder's piston and a source of hydraulic fluid. Between these two points there is for at least a part of the line, two parallel lines where one of them comprises a pump and in the other line is there arranged a control element. This control element is of a kind that allows less fluid through this line in the opposite direction of the pump, than the pump when the pump is running.

The control element may be a restriction orifice or a valve, which valve according to the present invention in a neutral position is open.

This means that the valve have to be feed a signal and energy to be switched to a closed position, where after or at the same time the motor is turned on and thereby running the pump and hydraulic fluid is feed into the hydraulic cylinder to set the plug in the pipeline. By setting the plug it is meant using the anchoring means for positioning the plug in the pipeline and hold it there and thereafter or simultaneously pressing the sealing devises of the plug against the inner surface of the pipeline to prevent fluid moving from one side of the plug to the other side of the plug.

When the plug is set and there is a differential pressure across the plug the signal and energy to the valve and motor is turned off and the valve goes back to its neutral position; which is open. The hydraulic pressurized fluid in the hydraulic cylinder is relieved and partly returns due to the open valve back to the hydraulic source. The hydraulic cylinder is therefore not exercising any pressure on the anchoring and or sealing devices and there is no need for a back-up system to be sure to be able to relieve the pressure in the hydraulic cylinders once the plug should be removed.

In the other embodiment where the control element is a restriction orifice, will the pump by its larger capacity for moving fluid through the line than the other parallel line, build pressure in the hydraulic cylinder when it is running. This even though there always will be some fluid that flows back through the restriction orifice. When the pump is turned off the pressure in the hydraulic cylinder will slowly decrease since the hydraulic fluid will return slowly through the restriction orifice. By this one achieves a depressurised hydraulic cylinder in the plug which is set in the pipeline, and there is a possibility to release the plug without energy supply to the plug. The plug may be released by again build pressure on the side of the plug which was relieved when the plug was set.

In a preferred embodiment of the plug it comprises a hydraulic cylinder with a through going piston rod and the source of hydraulic fluid is the void on the other side of the piston head. This solution also renders it possible to use a two-way pump in the system; however in the preferred embodiment it is used a one way pump. The fluid lines in the preferred embodiment run from one sub-chamber to the other sub-chamber, one on each side of the piston head, of the cylinder chamber.

The hydraulic cylinder in the plug for operating the anchoring and or sealing devices are in the preferred embodiment preloaded to return to a neutral position where the anchoring means are in a retracted position. This preloading may be achieved by the sealing devises in it self, but another possibility is to arrange at least one spring between an endplate of the plug and an endplate of the hydraulic cylinder. A preloading of the hydraulic cylinder ensures that there is no need for a two-way operational pump, which would be an alternative, and one has a total passive system for releasing the plug. However, it is not an absolute necessity to have a preloaded hydraulic cylinder, it is possible to release the plug with pressure differences on the two sides of the plug.

The plug in the preferred embodiment comprises a first endplate and a second endplate. The hydraulic cylinder with a cylinder chamber is connected to the first endplate. The cylinder chamber comprises a piston head with a piston rod, which runs through said piston head and through the whole of said cylinder chamber, i.e. a dobble rodded cylinder. Sealing means in form of a packer is arranged in abutment to an inner side of said first endplate. A first part of said anchoring means in the form of a first wedge is situated behind said packer, a second part of said anchoring means is provided partly outside said first part of said anchoring means and in abutment against a second endplate of said plug. The control system for the hydraulic cylinder comprises a valve with a neutral open position. Said second endplate is connected to the piston rod. Said piston rod extends preferably through both endplates.

This gives a plug which is compact and reliable, easy to maintain and may be set in a pipeline and left there for several months, even years before it is released again.

The present invention also regards a method for setting and releasing said plug. When setting the plug one inserts the plug in the pipe and moves it to the required position in the pipe. When the position is reached the setting procedure by closing said valve and starting said pump is activated. The pump then builds a necessary setting pressure in the hydraulic cylinder so that said anchoring means and or said sealing means is in close abutment with the internal wall of the pipeline and the plug is set and do not move. Then the pressure on one side of said plug is relieved until the pressure transmitters sense a sufficient differential pressure established across the plug and when this differential pressure is established the pump is stopped and the valve released to its neutral position, an open position.

When releasing the plug, the pump is inactive and the valve is in its neutral position which is open, one is building pressure on the non-pressure side of said plug and when said pressure reaches a set value the preloaded hydraulic cylinder will move the anchoring means to a retracted position and the plug is free. This is achieved without having to initiate a releasing procedure where valves have to be activated and feed energy to release the anchoring means. The procedure according to the invention is a totally passive system, which means it is a more reliable system.

One easy possibility to have a backup for this is to have a two-way pump in the circuit and activate the pump in a reverse direction at the same time as the valve is set to a closed position and by this the hydraulic cylinder is forcing the anchoring means to retract.

The plug according to the invention may be used instead of for instance a blind valve or any other stop valve in a pipeline in for instance a processing plant, it may be used for closing off a part of a oil and or gas line between one or several oilfields and a processing plan onshore and or a consumer market.

The invention will now be explained in detail with reference to the accompanying drawings where:
Fig. 1 shows a plug according to the invention in a pipeline with the anchoring means in the process of being set,
Fig. 2 shows the plug in fig. 1 in a set position, and
Fig. 3 shows a second embodiment of the plug according to the invention

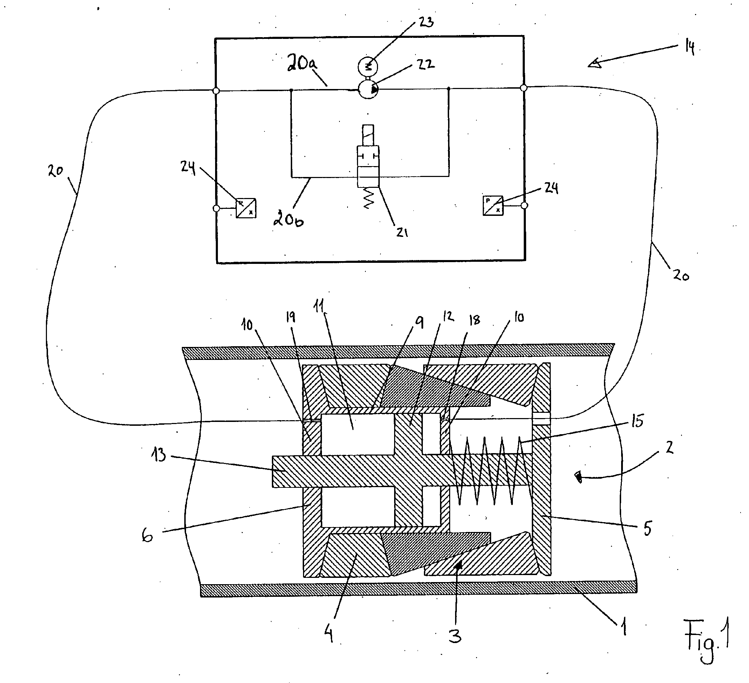

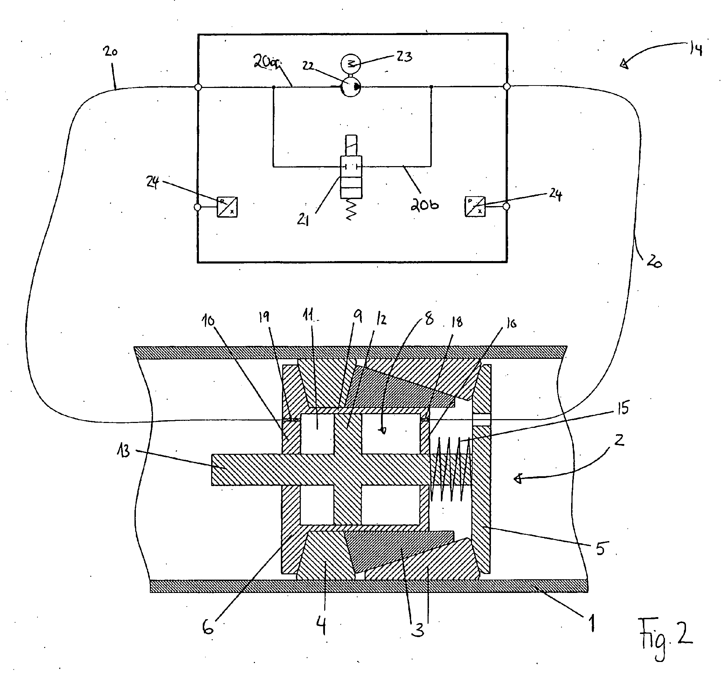

In fig 1 and 2 is shown a plug 2 according to the invention in a pipeline 1. The plug comprises anchoring devices 3 in form of wedges and sealing devices 4 in form of a packer. The plug has two endplates, 5 and 6 respectively, and a central hydraulic cylinder 8. The hydraulic cylinder 8 has a central axis mainly coinciding with the pipeline 1. The anchoring means 3 and sealing means 4 are situated around the circumference of the hydraulic cylinder 8 in the annulus between the hydraulic cylinder 8 and the pipeline 1, and between the two endplates 5 and 6. The second endplate 6 of the plug 2 also forms one of the hydraulic cylinders endplate 10, and the cylinder chamber 11 of the hydraulic cylinder formed by the cylinder 9 and the two endplates 10 are therefore connected to the second endplate 6 of the plug 2. The first endplate 5 of the plug 2 is connected to the hydraulic cylinders piston rod 13 whereto the piston head 12 is connected. The piston rod 13 runs in this preferred embodiment through the whole of the cylinder chamber 11, i.e. on both sides of the piston head 12. The hydraulic cylinder is preloaded to a neutral position of the plug where the anchoring means are in a retracted position, with a spring 15 between one endplate 10 of the hydraulic cylinder and the first endplate 5 of the plug 2.

The hydraulic cylinder has according to the invention a control system 14 for operating the hydraulic cylinder 8 and thereby the setting of the plug 2. The control system comprises a fluid line 20 for the hydraulic fluid from a first opening 18 in the cylinder chamber 11 on one side of the piston head 12 in the hydraulic cylinder 8 to a source of hydraulic fluid. In this preferred embodiment the source is part of the cylinder chamber 11 on the other side of the piston head 12 where the fluid line ends in a second opening 19. This is possible since the piston rod 13 runs through the cylinder chamber 11 on both sides of said piston head 12. In the fluid line is there in a part with two parallel lines 20a, 20b, positioned a pump 22 with a motor 23 running the pump in the first line 20a. There is also a valve 21 with an open and a closed position, which valve is placed in parallel with said pump in the other parallel line 20b. There are also pressure transmitters 24 on both sides of the pump 22 and valve 21.

In fig. 1 is the plug in operation for being set in the pipeline. The valve 21 is activated an set in a closed position and the pump 22 is running and pumping hydraulic fluid through the first opening 18 in the cylinder chamber and increasing the pressure on this side of the piston head 12. The piston head 12 is by this moved in the cylinder chamber 11 and the two wedge parts of the anchoring means 3 are pushed on top of each other and setting the plug in the pipeline. The pump further pumps hydraulic fluid through the first opening 18, and the hydraulic cylinder 8 pulls the two endplates 5 and 6 of the plug together further and the sealing device 4 is clenched between the anchoring device 3 and the second endplate 6 and seals against the internal wall of the pipeline I as shown in fig. 2. The pressure in the fluid in the pipeline is relieved on one side of the plug 2, and when a predetermined pressure difference between the two sides of the plug is noticed by the pressure transmitters then the pump is stopped and the valve is left in its neutral position, which is an open position. This position of the valve is shown in fig. 1. The spring 15 is in this position pressed together and will help force the anchoring means to a retracted position when there is less pressure differences between the two sides of the plug again. The spring 15 is however not necessary.

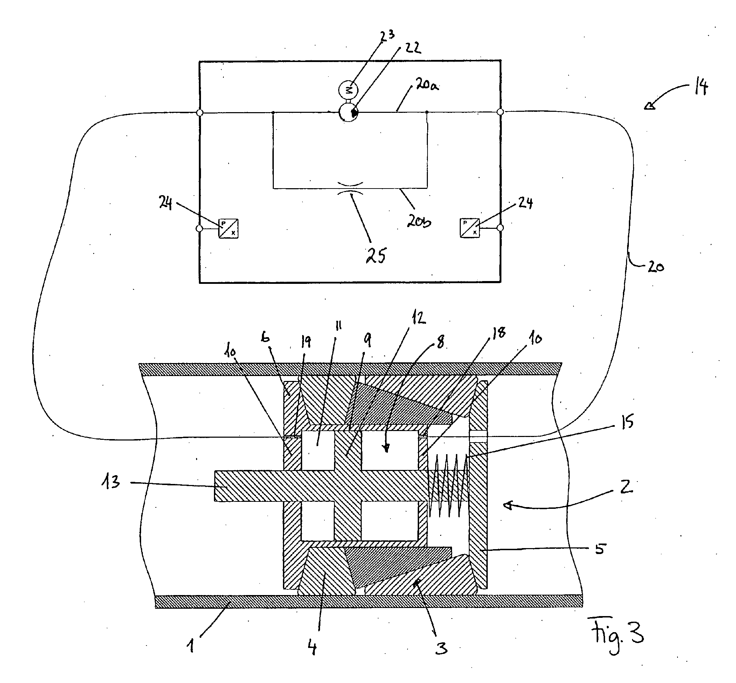

Fig. 3 shows another embodiment of the plug according to the invention. A control system is regulating a hydraulic cylinder in a plug 2 in a pipeline 1, which hydraulic cylinder is operating the anchoring devices 3 and sealing devices 4 of the plug 2. The hydraulic cylinder has a through going piston rod 13, which runs through the whole cylinder chamber 11 wherein the piston head 12 is situated.. The hydraulic cylinder 8 is in this case also preloaded with a spring 15 situated between an endplate 5 of the plug and an endplate 10 of the cylinder chamber 11. The line 20 in the control system runs from a first opening 18 in one of the sub-chamber of the cylinder chamber 11 to a second opening 19 in the other sub-chamber of the cylinder chamber 11. In a part of the line 20 is there arranged two parallel lines 20a and 20b. In the first of these lines 20a is there arranged a pump 22 with a motor 23, in the other line 20b is there arranged a restriction orifice 25. This restriction orifice 25 has a maximum through flow which is much smaller than the capacity of the pump 22 when the pump 22 is running. By this one achieves that when the pump 22 is running, a pressure is built in the hydraulic cylinder 8 on one side of the piston head 12, even though there is some return flow of fluid through the restriction orifice 25. When the pump 22 is turned off the level of pressure in the hydraulic cylinder 8 on the pressurized side of the piston head 12 will slowly decrease until there is equal pressure between the "pressurized side" of hydraulic cylinder and the source of hydraulic fluid, since the fluid slowly will flow back through the restriction orifice 25. The source of hydraulic fluid, in the case shown in fig. 3, is on the other side of the piston head 12.

The invention has now been explained with a preferred embodiment, but the skilled person will be able to do modifications and alterations within the scope of the invention as defined in the claims. For instance may there be several hydraulic cylinders operating the plug and there may be one or several control systems for operating these. The control system for the hydraulic cylinder may be fully or partly situated within the hydraulic cylinder itself. There may be several packers for establishing a double barrier etc.

## Claims

1. Plug for closing off a pipe (1), comprising at least one hydraulic cylinder (8), anchoring (3) and sealing (4) devices operated by the at least one hydraulic cylinder (8) with a control system (14) for setting and/or releasing the plug (2), which control system (14) comprises a fluid line (20) between a cylinder chamber (11) on one side of the hydraulic cylinder's piston head (12) and a source of hydraulic fluid, wherein the fluid line (20) comprises two parallel lines (20a, 20b) in which in a first of the lines (20a) there is arranged a pump (22), and the other second parallel line (20b) comprises a control element (21, 25) placed in parallel with said pump (22), which allows less fluid through the second line (20b) than the pump (22) in the firs line (20a) when the pump is running, which control element (21, 25) has a neutral open position and allows fluid through the second line (20b) when the pump is not running, relieving the pressure of the high pressure side of the hydraulic cylinder.

2. Plug according to claim 1, wherein the control element is a valve (21) with at least an open and closed position, where its neutral position is open.

3. Plug according to claim 1, wherein the control element is a restriction orifice.

4. Plug according to claim 2, wherein the valve (21) with energy feed will be switched to a closed position.

5. Plug according to one of the preceding claims, wherein the source of hydraulic fluid is an accumulation tank and/or the void on the other side of the piston head (21).

6. Plug according to one of the preceding claims, wherein the hydraulic cylinder has a piston rod (13) running through both sub chambers of said cylinder chamber (11).

7. Plug according to one of the preceding claims, wherein the fluid line (20) for the control system (14) is connected to the cylinder chamber (11) on both sides of said piston head (12).

8. Plug according to one of the preceding claims, wherein hydraulic cylinder (8) is preloaded to return to a neutral position where the anchoring means (3) are in a retracted position.

9. Plug according to claim 8, wherein the preloading is provided by at least one spring (15) between an endplate (5) of the plug and an endplate (10) of the hydraulic cylinder (8).

10. Plug according to one of the claims 1-2 or 4-7 wherein the pump (22) is a two-way pump.

11. Plug according to one of the claims 1-10, wherein the plug comprises a first endplate (5) and a second endplate (6), a cylinder chamber (11) connected to the second endplate (6), which cylinder chamber (11) comprises a piston head (12) with a piston rod (13), which runs through said piston head (12) and through whole of said cylinder chamber (11), sealing means (4) in form of a packer arranged in abutment to an inner side of said first endplate (6), and a first part of said anchoring means (3) in the form of a first wedge behind said packer, a second part of said anchoring means (3) provided partly outside said first part of said anchoring means (3) and in abutment against the first endplate (5) of said plug, where said first endplate (5) is connected to said piston rod (13).

12. Method for setting a plug (2) in a pipe (1), which plug (2) is comprising at least one hydraulic cylinder (8) anchoring (3) and sealing (4) devices operated by the at least one hydraulic cylinder (8) with a control system (14) comprising fluid lines (20) from a cylinder chamber (11) on one side of the hydraulic cylinder's piston head (12) to the other side of said piston head (12) and/or an accumulation tank and in the fluid lines (20) a pump (22) with a motor (23), and in parallel with the pump (22) a valve (21) comprising,
- inserting the plug (2) in the pipe (1),
- moving it to the required position in the pipe (1),
- activating a setting procedure by starting said pump (22) and building a necessary setting pressure in the hydraulic cylinder (8),
- relieving the pressure on one side of said plug (2) until a sufficient differential pressure is established across the plug (2), and wherein when starting said pump the valve (21) is set in a closed position, and after a sufficient differential pressure is established stopping the pump (22) and releasing the valve (21) to its neutral position, an open position.

13. Method for releasing a plug (2) in a pipe (1), which plug (2) is comprising at least one hydraulic cylinder (8) anchoring (3) and sealing (4) devices operated by the at least one hydraulic cylinder (8) with a control system (14) comprising fluid lines (20) from at least one side of the hydraulic cylinder's piston head (12) to an accumulation tank and or to the other side of said piston head (12), and in the fluid lines (20) a pump (22) with a motor (23), and in parallel with the pump (22) a valve (21) where the valve (21) in its neutral position is open, comprising
building a pressure on the non-pressure side of said plug (2),
when said pressure reaches a value the preloaded hydraulic cylinder (8), with the open valve (21) in the control system (14), moving the anchoring means (3) to a retracted position such that the plug (2) is free.

14. Method according to claim 13, wherein the valve (21) is set to a closed position and the pump (22) is run in an opposite direction and the hydraulic cylinder (8) retracts the anchoring means (3).

## Patentansprüche

1. Verschlussstopfen zum Verschließen eines Rohrs (1), der mindestens einen Hydraulikzylinder (8), Verankerungsvorrichtungen (3) und Abdichtvorrichtungen (4) umfasst, die von dem mindestens einen Hydraulikzylinder (8) mit einem Regel-/Steuersystem (14) zum Festsetzen und/oder Lösen des Verschlussstopfens (2) betätigt werden, welches Regel-/Steuersystem (14) eine Flüssigkeitsleitung (20) zwischen einer Zylinderkammer (11) auf einer Seite des Kolbenkopfs (12) des Hydraulikzylinders und eine Hydraulikflüssigkeitsquelle umfasst, wobei die Flüssigkeitsleitung (20) zwei parallele Leitungen (20a, 20b) umfasst, wobei in einer ersten der Leitungen (20a) eine Pumpe (22) angeordnet ist, und die andere, zweite parallele Leitung (20b) ein parallel mit der Pumpe (22) angeordnetes Regelelement (21, 25) umfasst, das weniger Flüssigkeit durch die zweite Leitung (20b) durchlässt als die Pumpe (22) in der ersten Leitung (20a) durchlässt, wenn die Pumpe läuft, welches Regelelement (21, 25) eine offene Ruhestellung besitzt und Flüssigkeit durch die zweite Leitung (20b) durchlässt, wenn die Pumpe nicht läuft, wodurch der Druck auf der Hochdruckseite des Hydraulikzylinders abgebaut wird.

2. Verschlussstopfen nach Anspruch 1, wobei es sich bei dem Regelelement um ein Ventil (21) mit mindestens einer offenen und geschlossenen Stellung handelt, wobei seine Ruhestellung offen ist.

3. Verschlussstopfen nach Anspruch 1, wobei das Regelelement eine Drosselöffnung ist.

4. Verschlussstopfen nach Anspruch 2, wobei das Ventil (21) bei Energiezufuhr in eine geschlossene Stellung umgeschaltet wird.

5. Verschlussstopfen nach einem der vorhergehenden Ansprüche, wobei es sich bei der Hydraulikflüssigkeitsquelle um einen Sammeltank und/oder den Leerraum auf der anderen Seite des Kolbenkopfs (12) handelt.

6. Verschlussstopfen nach einem der vorhergehenden Ansprüche, wobei der Hydraulikzylinder eine Kolbenstange (13) besitzt, die durch beide Teilkammern der Zylinderkammer (11) verläuft.

7. Verschlussstopfen nach einem der vorhergehenden Ansprüche, wobei die Flüssigkeitsleitung (20) für das Regel-/Steuersystem (14) auf beiden Seiten des Kolbenkopfs (12) an die Zylinderkammer (11) angeschlossen ist.

8. Verschlussstopfen nach einem der vorhergehenden Ansprüche, wobei der Hydraulikzylinder (8) vorbelastet ist, um in eine Ruhestellung zurückzukehren, in der die Verankerungsvorrichtungen (3) sich in einer zurückgezogenen Stellung befinden.

9. Verschlussstopfen nach Anspruch 8, wobei die Vorbelastung durch mindestens eine Feder (15) zwischen einer Endplatte (5) des Verschlussstopfens und einer Endplatte (10) des Hydraulikzylinders (8) bereitgestellt wird.

10. Verschlussstopfen nach einem der Ansprüche 1 - 2 oder 4 - 7, wobei es sich bei der Pumpe (22) um eine Zweiwegepumpe handelt.

11. Verschlussstopfen nach einem der Ansprüche 1 - 10, wobei der Verschlussstopfen eine erste Endplatte (5) und eine zweite Endplatte (6) umfasst, eine Zylinderkammer (11) an die zweite Endplatte (6) angeschlossen ist, die Zylinderkammer (11) einen Kolbenkopf (12) mit einer Kolbenstange (13) umfasst, die durch den Kolbenkopf (12) und durch die gesamte Zylinderkammer (11) verläuft, Abdichtvorrichtungen (4) in Form eines Dichrungsstücks in Anlage an der Innenseite der ersten Endplatte (6) angeordnet sind, und ein erstes Teil der Verankerungsvorrichtungen (3) in Form eines ersten Keils hinter dem Dichtungsstück angeordnet ist, ein zweites Teil der Verankerungsvorrichtungen (3) teilweise außerhalb des ersten Teils der Verankerungsvorrichtungen (3) und in Anlage an der ersten Endplatte (5) des Verschlussstopfens angeordnet ist, wobei die erste Endplatte (5) an die Kolbenstange (13) angeschlossen ist.

12. Verfahren zum Einsetzen eines Verschlussstopfens (2) in ein Rohr (1), wobei der Verschlussstopfen (2) mindestens einen Hydraulikzylinder (8), Verankerungsvorrichtungen (3) und Abdichtvorrichtungen (4) umfasst, die von dem mindestens einen Hydraulikzylinder (8) mit einem Regel-/Steuersystem (14) betätigt werden, das Flüssigkeitsleitungen (20) ausgehend von einer Zylinderkammer (11) auf einer Seite des Kolbenkopfs (12) des Hydraulikzylinders zur anderen Seite des Kolbenkopfs (12) umfasst und parallel mit einer Pumpe (22) und/oder einem Sammeltank angeordnet sind, und in den Flüssigkeitsleitungen (20) die Pumpe (22) mit einem Motor (23) angeordnet ist, und parallel mit der Pumpe (22) ein Ventil (21) angeordnet ist, Folgendes umfassend:
- Einsetzen des Verschlussstopfens (2) in das Rohr (1),
- Bewegen des Verschlussstopfens zur Sollstellung im Rohr (1),
- Aktivieren eines Festsetzungsvorgangs durch Starten der Pumpe (22) und Aufbauen eines notwendigen Festsetzungsdrucks im Hydraulikzylinder (8),
- Abbauen des Drucks auf einer Seite des Verschlussstopfens (2), bis ein ausreichender Differenzdruck am Verschlussstopfen (2) hergestellt ist, und wobei, wenn die Pumpe gestartet wird, das Ventil (21) in eine geschlossene Stellung versetzt wird, und nachdem ein ausreichender Differenzdruck hergestellt wurde, die Pumpe (22) angehalten und das Ventil (21) in seine Ruhestellung, eine offene Stellung, freigesetzt wird.

13. Verfahren zum Lösen eines Verschlussstopfens (2) in einem Rohr (1), wobei der Verschlussstopfen (2) mindestens einen Hydraulikzylinder (8), Verankerungsvorrichtungen (3) und Abdichtvorrichtungen (4) umfasst, die von dem mindestens einen Hydraulikzylinder (8) mit einem Regel-/Steuersystem (14) betätigt werden, das Flüssigkeitsleitungen (20) ausgehend von mindestens einer Seite des Kolbenkopfs (12) des Hydraulikzylinders zu einem Sammeltank oder zur anderen Seite des Kolbenkopfs (12) umfasst, und in den Flüssigkeitsleitungen (20) eine Pumpe (22) mit einem Motor (23) und parallel mit der Pumpe (22) ein Ventil (21) umfasst, wobei das Ventil (21) in seiner Ruhestellung offen ist, Folgendes umfassend:
- Aufbauen eines Drucks auf der drucklosen Seite des Verschlussstopfens (2),
- wobei, wenn der Druck einen Wert erreicht, der vorgespannte Hydraulikzylinder (8) mit dem offenen Ventil (21) im Regel-/Steuersystem (14), die Verankerungsvorrichtungen (3) derart in eine zurückgezogene Stellung bewegt, dass der Verschlussstopfen (2) frei ist.

14. Verfahren nach Anspruch 13, wobei das Ventil (21) in eine geschlossene Stellung versetzt wird, und die Pumpe (22) in einer gegenläufigen Richtung betrieben wird, und der Hydraulikzylinder (4) die Verankerungsvorrichtungen (3) zurückzieht.

## Revendications

1. Bouchon pour isoler un tuyau (1), comprenant au moins un vérin hydraulique (8), des dispositifs d'ancrage (3) et d'étanchéité (4) actionnés par le au moins un vérin hydraulique (8) avec un système de commande (14) pour mettre en place et/ou retirer le bouchon (2), lequel système de commande (14) comprend une conduite de fluide (20) entre une chambre de vérin (1) sur un côté de la tête de piston (12) du vérin hydraulique, et une source de fluide hydraulique, dans lequel la conduite de fluide (20) comprend deux conduites parallèles (20a, 20b) dans lesquelles, dans une première des conduites (20a), on agence une pompe (22) et la seconde conduite parallèle (20b) comprend un élément de commande (21, 25) placé parallèlement à ladite pompe (22), qui autorise moins de fluide dans la seconde conduite (20b) que la pompe (22) dans la première conduite (20a) lorsque la pompe fonctionne, lequel élément de commande (21, 25) a une position ouverte neutre et permet au fluide de passer dans la seconde conduite (20b) lorsque la pompe ne fonctionne pas, déchargeant la pression du côté haute pression du vérin hydraulique.

2. Bouchon selon la revendication 1, dans lequel l'élément de commande est une vanne (21) avec au moins une position ouverte et fermée, où sa position neutre est ouverte.

3. Bouchon selon la revendication 1, dans lequel l'élément de commande est un orifice de restriction.

4. Bouchon selon la revendication 2, dans lequel la vanne (21) avec l'alimentation d'énergie, est commutée dans une position fermée.

5. Bouchon selon l'une quelconque des revendications précédentes, dans lequel la source de fluide hydraulique est un réservoir d'accumulation et/ou de vide de l'autre côté de la tête de piston (21).

6. Bouchon selon l'une quelconque des revendications précédentes, dans lequel le vérin hydraulique a une tige de piston (13) s'étendant à travers les deux sous-chambres de ladite chambre de vérin (11).

7. Bouchon selon l'une quelconque des revendications précédentes, dans lequel la conduite de fluide (20) pour le système de commande (14) est raccordée à la chambre de vérin (11) des deux côtés de ladite tête de piston (12).

8. Bouchon selon l'une quelconque des revendications précédentes, dans lequel le vérin hydraulique (8) est préchargé pour revenir à une position neutre dans laquelle les moyens d'ancrage (3) sont dans une position rétractée.

9. Bouchon selon la revendication 8, dans lequel la précharge est fournie par au moins un ressort (15) entre une plaque d'extrémité (5) du bouchon et une plaque d'extrémité (10) du vérin hydraulique (8).

10. Bouchon selon l'une quelconque des revendications 1 à 2 ou 4 à 7, dans lequel la pompe (22) est une pompe à deux voies.

11. Bouchon selon l'une quelconque des revendications 1 à 10, dans lequel le bouchon comprend une première plaque d'extrémité (5) et une seconde plaque d'extrémité (6), une chambre de vérin (11) raccordée à la seconde plaque d'extrémité (6), laquelle chambre de vérin (11) comprend une tête de piston (12) avec une tige de piston (13), qui s'étend à travers ladite tête de piston (12) et à travers la totalité de ladite chambre de vérin (11), les moyens d'étanchéité (4) se présentant sous la forme d'une garniture d'étanchéité agencée en butée contre un côté interne de ladite première plaque d'extrémité (6), et une première plaque desdits moyens d'ancrage (3) se présentant sous la forme d'une première cale derrière ladite garniture d'étanchéité, une seconde partie desdits moyens d'ancrage (3) étant prévue partiellement à l'extérieur de ladite première partie desdits moyens d'ancrage (3) et en butée contre la première plaque d'extrémité (5) dudit bouchon, où ladite première plaque d'extrémité (5) est raccordée à ladite tige de piston (13).

12. Procédé pour placer un bouchon (2) dans un tuyau (1), lequel bouchon (2) comprend au moins un vérin hydraulique (8), des dispositifs d'ancrage (3) et d'étanchéité (4) actionnés par le au moins un vérin hydraulique (8) avec un système de commande (14) comprenant des conduites de fluide (20) à partir d'une chambre de vérin (11) sur un côté de la tête de piston (12) du vérin hydraulique jusqu'à l'autre côté de ladite tête de piston (12) et/ou un réservoir d'accumulation et dans les conduites de fluide (20), une pompe (22) avec un moteur (23) et parallèlement à la pompe (22) une vanne (21) comprenant les étapes consistant à :
◆ insérer le bouchon (2) dans le tuyau (1),
◆ le déplacer dans la position requise dans le tuyau (1),
◆ activer une procédure de mise en place en commençant par ladite pompe (22) et en accumulant une pression d'installation nécessaire dans le vérin hydraulique (8),
◆ décharger la pression d'un côté desdits bouchons (2) jusqu'à ce qu'une pression différentielle suffisante est établie sur le bouchon (2), et dans lequel lors du démarrage de ladite pompe, la vanne (21) est dans une position fermée, et après qu'une pression différentielle suffisante a été établie, arrêter la pompe (22) et retirer la vanne (21) dans sa position neutre, une position ouverte.

13. Procédé pour retirer un bouchon (2) dans un tuyau (1), lequel bouchon (2) comprend au moins un vérin hydraulique (8), des dispositifs d'ancrage (3) et d'étanchéité (4) actionnés par le au moins un vérin hydraulique (8) avec un système de commande (14) comprenant des conduites de fluide (20) à partir d'au moins un côté de la tête de piston (12) du vérin hydraulique jusqu'à un réservoir d'accumulation et/ou l'autre côté de ladite tête de piston (12) et dans les conduites de fluide (20), une pompe (22) avec un moteur (23), et parallèlement à la pompe (22), une vanne (21) où la vanne (21) dans sa position neutre est ouverte, comprenant les étapes consistant à :
accumuler une pression sur le côté sans pression dudit bouchon (2),
lorsque ladite pression atteint une valeur du vérin hydraulique préchargé (8), avec la vanne ouverte (21) dans le système de commande (14), déplacer les moyens d'ancrage (3) dans une position rétractée, de sorte que le bouchon (2) est libre.

14. Procédé selon la revendication 13, dans lequel la vanne (21) est dans une position fermée et la pompe (22) fonctionne dans une direction opposée et le vérin hydraulique (8) rétracte les moyens d'ancrage (3).
